# EUROPÄISCHE PATENTSCHRIFT

(11) **EP 1 429 910 B1**
(45) Veröffentlichungstag und Bekanntmachung des Hinweises auf die Patenterteilung: **08.11.2006**
(21) Anmeldenummer: 02800055.2
(22) Anmeldetag: 11.06.2002
(51) Int. Cl.: B29C 65/14, B29C 65/18, G03G 15/00

(54) **VERFAHREN UND EINRICHTUNG ZUR HERSTELLUNG EINES ZWISCHENTRÄGERBANDES DURCH VERSCHWEISSEN MIT ANSCHLIESSENDER WÄRMEBEHANDLUNG**
METHOD AND DEVICE FOR PRODUCING AN INTERMEDIATE SUPPORTING STRIP BY WELDING AND INVOLVING A SUBSEQUENT HEAT TREATMENT
PROCEDE ET DISPOSITIF DE FABRICATION D'UNE BANDE SUPPORT INTERMEDIAIRE PAR SOUDAGE ET TRAITEMENT THERMIQUE CONSECUTIF

(30) Priorität: 24.09.2001 WO PCT/EP01/11033
(43) Veröffentlichungstag der Anmeldung: 23.06.2004
(73) Patentinhaber: Océ Printing Systems GmbH, 85586 Poing (DE)
(72) Erfinder: LINK, Robert, 80337 München (DE)
(74) Vertreter: Thoenes, Dieter
(86) Internationale Anmeldenummer: PCT/EP2002/006405
(87) Internationale Veröffentlichungsnummer: WO 2003/028982

(56) Entgegenhaltungen:
- EP-A- 0 928 678
- EP-A- 0 929 001
- WO-A-02/26476
- DD-A- 243 893
- DE-A- 3 713 527
- US-A- 3 383 265
- US-A- 4 197 149
- US-A- 4 211 594

## Beschreibung

Die Erfindung betrifft ein Verfahren und eine Einrichtung zur Herstellung eines Endlosbandes aus Kunststoff für ein Zwischenträgerband in einem elektrografischen Drucker oder Kopierer.

In elektrografischen Druckern oder Kopierern werden Zwischenträgerbänder eingesetzt, um latente elektrostatische Bilder zu erzeugen und/oder einen Träger für umzudruckende Tonerbilder bereitzustellen. Beispielsweise wird als Zwischenträgerband ein Endlosband mit einer fotoleitenden Schicht, z.B. ein OPC-Band (organic-photo-conducting) verwendet, das durch Belichten gemäß einem vorgegebenen Bildmuster ein entsprechendes elektrostatisches Ladungsbild, ein sogenanntes latentes Ladungsbild, ausbildet. In einer Entwicklerstation wird dann dieses latente Ladungsbild mit Tonermaterial eingefärbt; dieses Tonerbild wird dann später auf Papier oder einen anderen Aufzeichnungsträger übertragen und dort fixiert.

Ein endloses Zwischenträgerband kann auch als Transferband dazu dienen, Tonerbilder aufzusammeln und diese an eine Umdruckstelle weiterzufördern. Beispielsweise bei einem Mehrfarbendruck wird ein erstes Tonerbild einer ersten Farbe auf das Zwischenträgerband übertragen. Anschließend wird auf dieses erste Tonerbild ein zweites Tonerbild mit einer zweiten Farbe übertragen etc.. Die so einander überlagerten, mehrfarbigen Tonerbilder auf dem Zwischenträgerband werden dann zu einer Umdruckstelle gefördert und dort auf den Aufzeichnungsträger übertragen und fixiert.

Zur Herstellung eines endlosen Zwischenträgerbandes müssen Enden einer Kunststofffolie miteinander verbunden werden.

Die dabei entstehende Schweißnaht kann Ursache für zahlreiche Störungen sein. Beispielsweise führt eine Verdikkung entlang der Schweißnaht zu einem erhöhten Verschleiß beim Umlaufen des Zwischenträgerbandes. Außerdem können die Materialeigenschaften im Bereich der Schweißnaht verändert sein, so daß dieser Bereich im allgemeinen als fotoleitfähiger Bereich oder als Bereich zur Aufnahme eines Tonerbildes nicht genutzt werden kann.

Aus der DE 19 832 168 A1 ist ein Verfahren und eine Vorrichtung zum Schweißen von thermoplastischen Kunststoffen unter Verwendung von Laserlicht bekannt. Die Enden einer thermoplastischen Kunststofffolie werden auf Stoß angeordnet und können mit Hilfe eines Halteelementes und einer Quarzglasplatte gehalten werden. Über die Quarzglasplatte wird Laserlicht eingekoppelt, wodurch die Enden miteinander verschweißt werden. Besondere Maßnahmen zur Herstellung einer gleichmäßigen Schweißnaht sind nicht beschrieben.

Aus der DE 19 516 726 A1 ist ein Verfahren zum Formen und Verschließen einer Faltschachtel beschrieben, wobei Kunststoffschichten zum Verpacken unter Verwendung von Strahlung miteinander verschweißt werden. Der Schweißvorgang wird durch Aufbringung von Druck unterstützt.

Die DE 3 713 527 A1 beschreibt das Verschweißen von Kunststoffteilen, deren Enden stumpf aneinander geführt werden. Die Kunststoffteile werden an ihren Enden mit Profilen versehen, so daß diese Profile ineinandergreifen können. Mit Hilfe eines Laser-Schweißgeräts werden dann die Enden mit den Profilen miteinander verschweißt.

Aus der EP-A-0 705 682 ist ein Verfahren zum thermischen Verbinden von Substraten aus Polymeren bekannt, bei dem mindestens ein Substrat mit einem Mikrowellen absorbierenden Medium beschichtet wird. Die Substrate werden dann in einem Mikrowellenfeld miteinander verschweißt.

Aus der WO 02/26476 A1 (nicht vorveröffentlicht) derselben Anmelderin ist ein Verfahren zum Herstellen eines Endlosbandes für ein Zwischenträgerband durch Verschweißen bekannt. Dieses Dokument wird hiermit durch Bezugnahme in den Offenbarungsgehalt der vorliegenden Anmeldung aufgenommen.

In der Praxis hat sich nun gezeigt, daß die nach dem in der WO 02/26476 A1 beschriebenen Verfahren verschweißten Kunststofffolien im Nahtbereich oft eine veränderte amorphe Struktur aufweisen, die unter thermischer Belastung eine niedrigere Zugfestigkeit haben als die Struktur des Ausgangsmaterials. Außerdem kann diese amorphe Struktur als Inhomogenität zwischen Nahtbereich und dem Ausgangsmaterial zu einer Spannungsbildung führen. Wenn das durch Verschweißen hergestellte Zwischenträgerband in einem elektrografischen Drucker oder Kopierer eingesetzt wird, so wird es einer hohen Dauerbelastung unter erhöhten Temperaturbedingungen ausgesetzt. Aufgrund der amorphen Struktur im Nahtbereich kann die Lebensdauer eines derartig hergestellten Trägerbandes verringert sein.

Als nächstliegender Stand der Technik wird Dokument EP 0 929 001 A1 angesehen, das die Herstellung eines Zwischenträgerbandes aus Kunststoff für einen elektrographischen Drucker beschreibt. Die Enden einer thermoplastischen Kunststofffolie werden miteinander durch Beaufschlagung mit Laserstrahlung und durch Thermobonden verbunden.

Der Erfindung liegt die Aufgabe zugrunde, ein Verfahren und eine Einrichtung zur Herstellung eines Endlosbandes aus thermoplastischem Kunststoff anzugeben, dessen Oberfläche bei geringem Verschleiß eine große Ausnutzung gestattet und das eine hohe Dauerbeanspruchung hat.

Diese Aufgabe wird für ein Verfahren durch die Merkmale des Anspruchs 1 gelöst. Vorteilhafte Weiterbildungen sind in den abhängigen Ansprüchen angegeben.

Gemäß einem weiteren Aspekt der Erfindung wird eine Einrichtung zur Herstellung eines Endlosbandes aus thermoplastischem Kunststoff für ein Zwischenträgerband in einem elektrografischen Drucker oder Kopierer angegeben. Die mit dieser Einrichtung erzielbaren Vorteile stimmen mit den beim Verfahren beschriebenen Vorteilen überein.

Die Erfindung wird nachfolgend anhand von Ausführungsbeispielen gemäß den Figuren der Zeichnungen näher erläutert. Es zeigen:
- Figur 1: eine schematische Darstellung eines ersten Ausführungsbeispiels einer erfindungsgemäßen Einrichtung,
- Figur 2: eine schematische Darstellung eines zweiten Ausführungsbeispiels einer erfindungsgemäßen Einrichtung,
- Figur 3: eine schematische Darstellung eines Teils einer erfindungsgemäßen Einrichtung, der bei den Ausführungsbeispielen nach den Figuren 1 und 2 zusätzlich verwendbar ist,
- Figur 4: eine schematische Darstellung einer erfindungsgemäßen Einrichtung nach Figur 1 mit zwei Absorptionsvorrichtungen als viertes Ausführungsbeispiel,
- Figur 5: eine Absorptionsvorrichtung bestehend aus CrNi-Stahlblech mit einer Absorptionsschicht und
- Figur 6: eine Absorptionsvorrichtung mit einer transparenten Glasscheibe, einer DLC-Schicht und einer Antihaftbeschichtung.

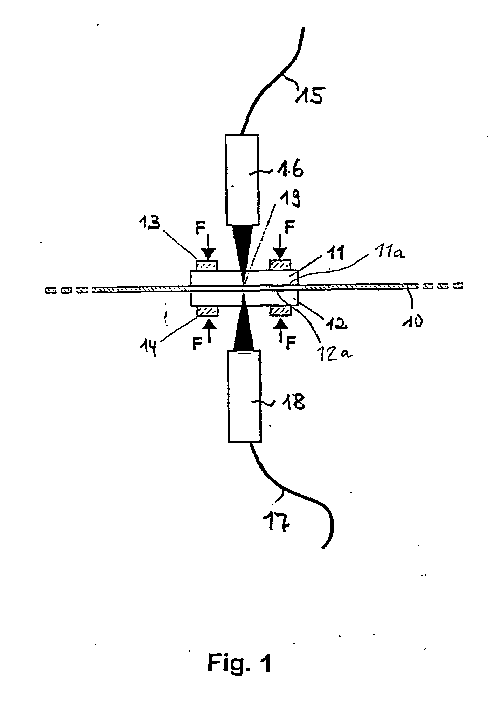

Bei dem Ausführungsbeispiel nach Figur 1 wird eine thermoplastische Kunststofffolie 10 zwischen ein transparentes Halterungselement, beispielsweise eine Glasscheibe 11, und ein transparentes Gegenhalterungselement, ebenfalls beispielsweise eine Glasscheibe 12, so eingelegt, daß die Folienenden stirnseitig exakt stumpf aneinander liegen. Zur Fixierung der Kunststofffolie 10 sowie zur Sicherstellung einer glatten nicht erhabenen Schweißnaht sind Anpressrahmen 13 und 14 vorgesehen, welche eine vofgegebenen Kraft F auf die Glasscheiben 11, 12 und damit auf die Kunststofffolie 10 ausüben. Die an die Kunststofffolie 10 anliegenden ebenenen Flächen der Glasscheiben 11, 12 bilden ebene Andruckflächen 11a, 12a. Alternativ können diese Andruckflächen 11a, 12a auch konzentrisch sein, z.B. Zylinderflächen. Die entsprechenden Glasscheiben sind dann Zylindermantelemente. In senkrechter Richtung zur Papierebene hat die Kunststofffolie eine Breite mindestens der Breite eines Standarddruckformats, z.B. DIN-A4. Die Glasscheiben 11, 12 haben eine Länge, die größer als diese Breite ist.

Über Strahlungsleiterfasern 15 und 17 sowie Fokussieroptiken 16 und 18 wird aus nicht eigens dargestellten Strahlungsquellen zur Erwärmung der Kunststofffolie 10 im Bereich der aneinanderliegenden Folienenden bis über den Schmelzpunkt hinaus Strahlung zugeführt. Dadurch entsteht zwischen den Folienenden eine Schweißnaht 19. Die Strahlungsquellen sind vorzugsweise Laserstrahlungsquellen, wie etwa Diodenlaser, Festkörperlaser, Gaslaser oder Laserdiodenarrays. Je nach Absorptionsvermögen des Materials der Kunststofffolie 10 wird ein bestimmter Teil der Strahlung absorbiert und in Wärme umgesetzt. Die Andruckflächen 11a, 12a haben einen Abstand voneinander, der durch die Dicke der Kunststofffolie 10 in kaltem Zustand bestimmt ist. Bei Erwärmung der Enden der Kunststofffolie 10 und deren Aufschmelzung bleibt dieser Abstand erhalten, d.h. die Kraft F wird entsprechend hoch gewählt. Das aufgeschmolzene Material verteilt sich dann entlang den stumpf aneinander stoßenden Enden mit einer Dicke entsprechend diesem Abstand.

Durch gleichzeitiges Bestrahlen der Kunststofffolie 10 von beiden Seiten über die Fokussieroptiken 16 und 18 kann eine über die gesamte Dicke der Kunststofffolie 10 gleichmäßige Schweißnaht 19 erzielt werden, was besonders bei gut absorbierenden Folienmaterialien vorteilhaft ist. Das Gegenhalterungselement 12 besteht dann aus einem für die Strahlung transparenten Material, wie etwa Glas. Dies ist insbesondere bei Folienmaterialien mit geringer Eindringtiefe der Strahlung, die kleiner als die halbe Foliendicke ist, vorteilhaft. Dabei ist dann kein nennenswerter Transmissionsanteil der Strahlung mehr vorhanden.

Zur Verbesserung der Qualität des Schweißvorganges und zur Kompensation von Folienmaterialschwankungen ist es weiterhin zweckmäßig, die Temperatur im Bereich der Schweißnaht 19 zu messen. In einem Regelkreis kann dann die Temperatur durch Anderung der Strahlungsleistung auf einem definierten Wert konstant gehalten werden.

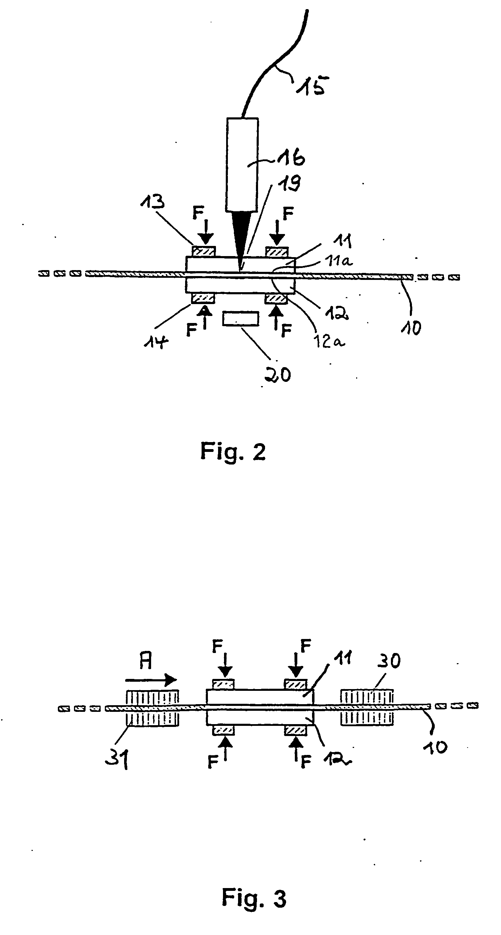

Beim Ausführungsbeispiel nach Figur 2, in der, wie auch in den weiteren Figuren, gleiche Elemente mit gleichen Bezugszeichen versehen sind, ist lediglich auf einer Seite der Kunststofffolie 10 sowie des Halterungselementes 11 und dem Anpressrahmen 13 eine Strahlungsquelle vorgesehen, welche über die Strahlungsleiterfaser 15 und die Fokussieroptik 16 Strahlung für die Schweißnaht 19 liefert.

Bei diesem Ausführungsbeispiel kann bei einem für die Strahlung weitgehend undurchlässigen Material der Kunststofffolie 10 und einem transparenten Gegenhalterungselement 12 zusätzlich eine Kontrolle durchgeführt werden, ob sich zwischen den zu verschweißenden Enden der Kunststofffolie 10 noch ein Spalt befindet. Auf der von der Bestrahlungsseite abgewandten Seite der Kunststofffolie 10 ist hierzu ein Strahlungsdetektor 20, beispielsweise eine Fotodiode, angeordnet, welcher einen eventuell durch einen vorhandenen Spalt durchtretenden Strahlungsanteil erfasst. Nur bei exakter Positionierung der Enden der Kunststofffolie ist der durchtretende Strahlungsanteil nahezu Null. Die genaue Positionierung der Enden der Kunststofffolie 10 kann manuell oder automatisiert durchgeführt werden, wobei der hindurchtretende Strahlungsanteil minimal sein soll.

Bei einem weiteren Ausführungsbeispiel sind die Dicke der Kunststofffolie 10 und die Wellenlänge der von der Strahlungsquelle 15, 16 gelieferten Strahlung derart aneinander angepasst, daß die optische Eindringtiefe der Strahlung kleiner oder gleich der halben Dicke der Kunststofffolie 10 ist. Dadurch ist gewährleistet, daß der Kunststofffolie 10 genügend Energie zuführbar ist, um sie korrekt verschweißen zu können.

Zur Verbesserung des Wirkungsgrades kann eines der Halterungselemente 11 und 12, vorzugsweise das Gegenhalterungselement 12 vorzugsweise an der betreffenden Andruckfläche 12a reflektierend ausgebildet sein. Dann wird transmittierte Strahlung in die Kunststofffolie 10 zurückgestrahlt. Das Halterungselement 12 kann z.B. als Spiegel oder als poliertes Metallblech ausgebildet sein, vorzugsweise ein Kupfer- oder Aluminiumblech, oder ein reflexionsbeschichtetes Material umfassen.

Bei den vorstehend beschriebenen Ausführungsbeispielen nach den Figuren 1 und 2 sowie bei dem noch zu beschreibenden Ausführungsbeispiel nach Figur 3 können das Halterungselement 11 und das Gegenhalterungselement 12 auf Seiten der Kunststofffolie 10 mit einer nicht eigens dargestellten Antihaftbeschichtung, beispielsweise Teflon oder eine hydrophobe DLC-Beschichtung, versehen werden. Damit wird ein Ankleben der Kunststofffolie 10 während des Schweißvorgangs vermieden.

Um bei der Einrichtung nach Figur 2 mit einer Bestrahlung von nur einer Seite aus eine qualitativ hochwertige Schweißnaht zu gewährleisten, kann die Kunststofffolie 10 auch umgedreht werden, so daß nacheinander eine Bestrahlung von beiden Seiten erfolgt.

Beim Ausführungsbeispiel nach Figur 3, in der ebenfalls gleiche Elemente wie in den Figuren 1 und 2 mit gleichen Bezugszeichen versehen sind, ist eine zusätzliche Einspannung der Kunststoffteile 10 mit Hilfe eines fest gelagerten Einspannelements 30 und eines beweglich gelagerten Einspannelements 31 Vorgesehen. Die Bewegung dieser Einspannelemente 30 und 31 zum Aneinanderpressen der Enden der Kunststofffolie 10 ist durch einen Pfeil A angedeutet. Bei anderen Ausführungsbeispielen kann sowohl das Einspannelement 30 als auch das Einspannelement 31 beweglich gelagert sein. Mit Hilfe der Einspannelemente 30, 31 kann durch das Aneinanderpressen die Qualität, inbesondere die Festigkeit der Schweißnaht, verbessert werden.

Die erfindungsgemäße Einrichtung lässt sich mit dem in ihr fixierten Kunststofffolie 10 mit einem Lineartisch in Richtung senkrecht zur Zeichenebene unter der fokussierten Strahlung hindurch bewegen. Es ist ebenso möglich, die Strahlung über den zu verschweißenden und in der erfindungsgemäßen Einrichtung fixierten Folienbereich hinweg zu bewegen. Es muss dann jedoch die Strahlungsquelle, d.h. die Strahlungsleiterfaser 15 bzw. 17 sowie die Fokussieroptik 16 bzw. 18, bewegbar ausgebildet sein. Auch kann die Strahlung z.B. mit einem Galvanometerspiegel abgelenkt oder z.B. mit einer Linienoptik aufgeweitet werden. Im letzteren Fall ist eine gleichzeitige Schweißung über die gesamte Folienbreite möglich.

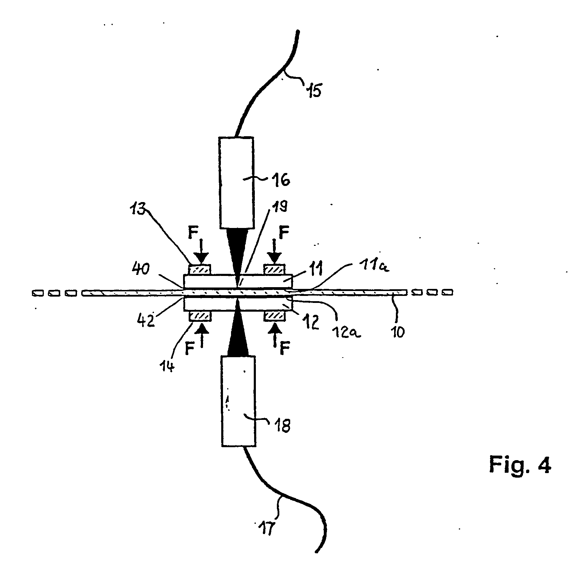

Bei dem Ausführungsbeispiel nach Figur 4, in der gleiche Elemente wie in Figur 1 mit gleichen Bezugszeichen versehen sind, wird zusätzlich zwischen Kunststofffolie 10 und Halterungselement 11, 12 jeweils eine Absorptionsvorrichtung 40, 42 eingesetzt. Die Absorptionsvorrichtung 40 befindet sich unmittelbar zwischen dem Halterungselement 11 und der Kunststofffolie 10 und bildet die erste Andruckfläche 11a. Die Absorptionsvorrichtung 42 liegt unmittelbar zwischen dem Gegenhalterungselement 12 und der Kunststofffolie 10 und bildet die zweite Andruckfläche 12a. Die der Strahlungsquelle 16 bzw. 18 zugewandte Seite der Absorptionsvorrichtung 40, 42 absorbiert jeweils die ausgesendete Strahlungsenergie und wandelt sie in Wärme um, die an die einander gegenüberstehenden Enden der Kunststofffolie 10 weitergegeben wird und die Verschweißung bewirkt. Bei diesem Ausführungsbeispiel kann somit beliebiges thermoplastisches Kunststoffmaterial unabhängig von der Jeweiligen Absorptionseigenschaft verwendet werden, beispielsweise vollkommen transparente Kunststofffolie.

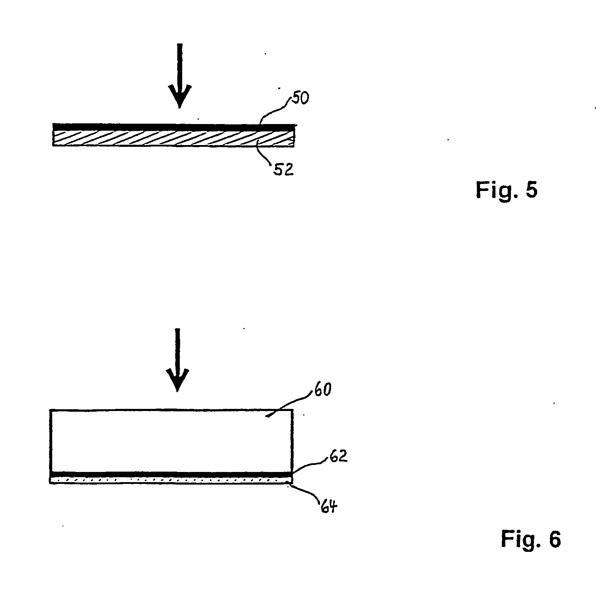

Bei einem weiteren Ausführungsbeispiel nach Figur 5 besteht die Absorptionsvorrichtung 40, 42 aus einem dünnen Metallblech, beispielsweise CrNi-Stahlblech, das zwischen der Kunststofffolie 10 und dem Halterungselement 11, 12 angeordnet ist. Die der Bestrahlungsseite zugewandte Seite des Metallblechs 52 kann zum Zwecke einer verbesserten Absorption aufgerauht oder mit einer absorbierenden Beschichtung 50, insbesondere mit Schwarzchrom oder Ofenlack, versehen werden.

Beim Ausführungsbeispiel nach Figur 6 besteht die Absorptionsvorrichtung 40, 42 aus einer absorbierenden Schicht 62, insbesondere einer hydrophoben DLC-Schicht oder einer Hartstoffschicht, vorzugsweise jeweils mit ca. 0,2 - 3 µm Dicke, auf einer als Träger dienenden transparenten Glasscheibe 60. Diese Glasscheibe 60 übernimmt gleichzeitig die Funktion des Halterungselements 11 oder 12 (vgl. Figur 4). Die absorbierende Schicht 62 kann auf der der Strahlung abgewandten Seite zusätzlich mit einer Antihaftschicht 64, insbesondere einer DLC-Beschichtung, Nanokompositschicht, Teflon oder Silikon, vorzugsweise mit einer Dicke von ca. 0,5 - 3 µm, versehen werden. Damit wird ein Ankleben der Kunststofffolie 10 während des Schweißvorgangs vermieden.

Das erfindungsgemäße Verfahren und die erfindungsgemäße, Einrichtung sind generell für alle Thermoplaste anwendbar. Besonders günstig ist die Verwendung von Polyester, Polycarbonat oder Polyamid, gegebenenfalls mit absorbierenden Zusätzen zur Abstimmung der Eindringtiefe der zu absorbierenden Strahlung. Dabei hat sich mit Ruß gefülltes Polyamid oder Polycarbonat als günstig erwiesen. Die Foliendicke liegt vorzugsweise im Bereich von 50 bis 200 µm.

Das erfindungsgemäße Verfahren und die erfindungsgemäße Einrichtung dient zur Herstellung von endlosen Fotoleiterbändern, sogenannten OPC-Bändern (organic-photo-conducting), sowie Transferbändern für elektrofotografische Geräte. Die Schweißnaht ist sehr gleichmäßig und hat die gleiche Dicke wie die Kunststofffolie. Dadurch ist es möglich, auch den Bereich der Schweißnaht als latenten Bildträger oder als Tonerbildträger auszunutzen. Ein derart hergestelltes Endlosband kann daher eine kürzere Länge haben, die Abnutzung im Bereich der Schweißnaht ist verringert und es kann ohne Papierverlust zum Bedrucken von Endlospapier eingesetzt werden.

Bei den beschriebenen Beispielen zum Verschweißen der Enden des Endlosbandes kann als Material eine teilkristalline Kunststofffolie verwendet werden. Die zu verbindenden Folienenden liegen dabei zum Beispiel zwischen zwei Glasplatten. Die Abkühlgeschwindigkeit aus der Schmelzphase des aufgeschmolzenen Kunststoffs, die unmittelbar mit dem Kristallinitätsgrad zusammenhängt, wird durch die Wärmeableitung in das Kunststoffmaterial und in die Glasplatten bestimmt. Demgemäß hängt dieser Kristallinitätsgrad im Bereich des aufgeschmolzenen Materials im wesentlichen von Wärmeleitungseffekten ab und läßt sich nur schwierig beeinflussen.

Beim thermischen Verschweißen und damit der Verflüssigung des teilkristallinen Kunststoffmaterials brechen vorhandene kristalline Strukturen auf. Beim anschließenden Abkühlen und Verfestigen bilden sich je nach Kunststoff diese kristallinen Strukturen nur teilweise oder gar nicht zurück. Als Beispiel für einen Kunststoff sei hier PET genannt, dessen hoher Kristallinitätsgrad von ca. 40 % im Schweißbereich nahezu Null wird, so daß das Material amorph ist. Die im Nahtbereich entstehende amorphe Struktur hat eine deutlich erniedrigte Glasübergangstemperatur. Dies führt unter thermischer Belastung zu einer verminderten Zugfestigkeit.

Wenn ein teilkristalliner Thermoplast verwendet wird, erfolgt gemäß der Erfindung daher nach der Verschweißung ein Rekristallisierungsschritt, bei dem das Kunststoffmaterial im Nahtbereich rekristallisiert. Beispielsweise umfaßt der Rekristallisierungsschritt Maßnahmen, bei denen die Abkühlphase für das Kunststoffmaterial im Nahtbereich verlängert ist. Dies kann durch Verwendung von Materialien mit niedriger Wärmeleitfähigkeit geschehen. Eine andere Möglichkeit besteht darin, die Teile, die die Andruckfläche bilden, für eine vorbestimmte Zeit auf einer erhöhten Temperatur zu halten, so daß der Abkühlprozess verlangsamt ist. Beispielsweise können die die Andruckfläche bildenden Teile vor dem Verschweißen aufgeheizt werden und dann der Schweißvorgang unter Zuführung weiterer Energie durchgeführt werden. Aufgrund der Vorheizung ist dann der Abkühlvorgang verlangsamt, wodurch eine Rekristallisierung stattfinden kann.

Gemäß einer Weiterbildung erfolgt beim Rekristallisierungsschritt eine Energiezuführung. Beispielsweise kann die Energiezuführung derart erfolgen, daß ein vorgegebenes Temperatur-Zeitdiagramm eingehalten wird.

Eine weitere Möglichkeit der Förderung der Kristallbildung nach dem Verschweißen besteht durch einmaliges oder mehrfaches Tempern. Der Nahtbereich wird nach dem Abkühlen durch eine mindestens einmalige erneute Energiezufuhr auf eine Temperatur unterhalb der Schmelztemperatur aufgeheizt. Vorzugsweise wird hierbei ein vorbestimmtes Temperatur-Zeitdiagramm eingehalten.

Vorzugsweise wird die Energiequelle, durch die die Verschweißung erfolgt, auch für die Energiezuführung zur Rekristallisierung verwendet. Bei einer großflächigen Verschweißung, beispielsweise mit Hilfe eines zu einem Band aufgeweiteten, stationären Laserstrahls, kann dieser nach dem Verschweißen der Enden der Kunststofffolie weiter bei reduzierter Leistung den Nahtbereich bestrahlen. Bei einem scannenden Strahlungssystem kann ein zusätzlicher Strahl aus einer zusätzlichen Strahlungsquelle oder aus der gleichen Strahlungsquelle, der unmittelbar dem Strahl zum Verschweißen folgt, zusätzlich Energie während des Abkühlens aus der Schmelzphase liefern. Es können jedoch auch andere Energiequellen, wie beispielsweise Heizstrahler mit einer lokalen Begrenzung durch z.B. Blenden, Widerstandsheizelemente, Peltierelemente, etc. verwendet werden, die in geeigneter Weise lokal Energie in den strukturveränderten Nahtbereich eintragen können. Beim Beispiel nach Figur 1 mit beidseitiger Strahlbeaufschlagung zum Verschweißen der Enden der Kunststofffolie 10 kann es ausreichen, den zusätzlichen Energieeintrag zum Rekristallisieren nur von einer Seite aus vorzunehmen.

Zur Wärmebehandlung durch Tempern kann ein großflächig strahlender Wärmestrahler verwendet werden. Der Wärmestrahl wird dann gleichzeitig über die gesamte Länge der Schweißnaht absorbiert. Die Strahlung wird mithilfe von Blenden und/oder einem Hohlspiegel begrenzt.

Wenn ein amorpher, nicht kristalliner Thermoplast verwendet wird, oder ein Thermoplast der während der Abkühlphase aus der Schmelze seine Kristallinität schon wieder erreicht, kann auf den zusätzlichen Rekristallisierungsschritt verzichtet werden.

### Bezugszeichenliste

- 10: Kunststofffolie
- 11: Halterungselement
- 11a: Andruckfläche
- 12: Gegenhalterungselement
- 12a: Andruckfläche
- 13, 14: Anpressrahmen
- 15, 17: Strahlunasleiterfaser
- 16, 18: Fokussieroptik
- 19: Schweißnaht
- 20: Strahlungsdetektor
- 30, 31: Einspannelement
- 40, 42: Absorptionsvorrichtung
- 50: absorbierende Beschichtung
- 52: Metallblech
- 60: Glasscheibe
- 62: absorbierende Schicht
- 64: Antihaftschicht

## Patentansprüche

1. Verfahren zur Herstellung eines Endlosbandes aus Kunststoff für ein Zwischenträgerband in einem elektrografischen Drucker oder Kopierer,
bei dem die Enden einer thermoplastischen teilkristallinen Kunststofffolie (10), die mindestens die Breite eines Standarddruckfomats hat, stirnseitig auf Stoß aneinandergelegt werden,
die Enden der Kunststofffolie (10) durch Strahlung auf die für die Verschweißung erforderliche Temperatur erhitzt und miteinander verschweißt werden,
und bei dem nach der Verschweißung ein Rekristallisierungsschritt erfolgt, bei dem das Kunststoffmaterial im Nahtbereich rekristallisiert.

2. Verfahren nach Anspruch 1, **dadurch gekennzeichnet, daß** der Rekristallisierungsschritt Maßnahmen umfaßt, bei der die Abkühlphase für das Kunststoffmaterial im Nahtbereich verlängert ist.

3. Verfahren nach Anspruch 1 oder 2, bei dem beim Rekristallisierungsschritt eine Energiezuführung erfolgt.

4. Verfahren nach Anspruch 3, **dadurch gekennzeichnet, daß** die Energiezuführung derart erfolgt, daß ein vorgegebenes Temperatur-Zeitdiagramm eingehalten wird.

5. Verfahren nach einem der vorhergehenden Ansprüche, **dadurch gekennzeichnet, daß** der Nahtbereich nach dem Abkühlen durch eine mindestens einmalige erneute Energiezufuhr auf eine Temperatur unterhalb der Schmelztemperatur aufgeheizt wird.

6. Verfahren nach Anspruch 5, **dadurch gekennzeichnet, daß** ein vorbestimmtes Temperatur-Zeitdiagramm eingehalten wird.

7. Verfahren nach einem der vorhergehenden Ansprüche, **dadurch gekennzeichnet, daß** die Energiequelle, durch die die Verschweißung erfolgt, auch für die Energiezuführung zur Rekristallisierung verwendet wird.

8. Verfahren nach einem der vorhergehenden Ansprüche, **dadurch gekennzeichnet, daß** zur Energiezuführung für die Rekristallisierung eine zusätzliche Energiequelle verwendet wird.

9. Verfahren nach einem der vorhergehenden Ansprüche, **dadurch gekennzeichnet, daß** beiderseits der Enden jeweils eine Andruckfläche (11a, 12a) angeordnet wird, deren Länge mindestens der Breite des Standarddruckformats entspricht und die die Flächen der Enden gegeneinander drücken derart, daß beim Aufschmelzen des Kunststoffmaterials der Stirnseiten der einander gegenüberstehenden Enden der durch die Dicke der kalten Kunststofffolie (10) bestimmte Abstand der Andruckflächen (11a, 12a) voneinander erhalten bleibt.

10. Verfahren nach einem der vorhergehenden Ansprüche, **dadurch gekennzeichnet, daß** die Kunststofffolie (10) durch Strahlung von einer Seite aus erhitzt wird.

11. Verfahren nach einem der vorhergehenden Ansprüche, **dadurch gekennzeichnet, daß** die Kunststofffolie (10) durch Strahlung von beiden Seiten erhitzt wird.

12. Verfahren nach einem der vorhergehenden Ansprüche, **dadurch gekennzeichnet, daß** die Kunststofffolie (10) durch Strahlung gleichzeitig von beiden Seiten erhitzt wird.

13. Verfahren nach Anspruch 12, **dadurch gekennzeichnet, daß** die Kunststofffolie (10) durch Strahlung auf einer Seite erhitzt und nachfolgend nach dem Umdrehen auf der anderen Seite weiter erhitzt wird.

14. Verfahren nach einem der vorhergehenden Ansprüche, **dadurch gekennzeichnet, daß** die Verschweißung der Kunststofffolie (10) durch Laserstrahlung erfolgt.

15. Verfahren nach einem der vorhergehenden Ansprüche, **dadurch gekennzeichnet, daß** die Strahlung jeweils an der der Strahlungsquelle (15, 17) zugewandten Seite in der Kunststofffolie (10) absorbiert wird.

16. Verfahren nach einem der vorhergehenden Ansprüche, **dadurch gekennzeichnet, daß** die einander gegenüberstehenden Enden der Kunststofffolie (10) während des Verschweißens gegeneinander vorgespannt werden.

17. Verfahren nach einem der vorhergehenden Ansprüche, **dadurch gekennzeichnet, daß** während des Schweißvorgangs und/oder der Energiezufuhr für die Rekristallisierung die Temperatur der Kunststofffolie (10) an der Schweißnaht (19) gemessen und die Strahlungsleistung in Abhängigkeit von der gemessenen Temperatur eingestellt oder geregelt wird.

18. Verfahren nach einem der vorhergehenden Ansprüche, **dadurch gekennzeichnet, daß** die Kunststofffolie (10) von einer Seite aus bestrahlt wird und die auf der anderen Seite durch einen Spalt zwischen den zu verschweißenden Enden hindurchgehende Strahlung detektiert wird.

19. Verfahren nach einem der vorhergehenden Ansprüche, **dadurch gekennzeichnet, daß** die Andruckflächen (11a, 12a) durch Platten (11, 12) gebildet werden.

20. Verfahren nach Anspruch 19, **dadurch gekennzeichnet, daß** wenigstens eine der Platten (11, 12) aus einem für die Strahlung transparentem Material, vorzugsweise Glas, besteht, wobei die Platten vorzugsweise eine Antihaftschicht aus Teflon oder hydrophobe DLC-Schicht aufweisen.

21. Verfahren nach einem der vorhergehenden Ansprüche, **dadurch gekennzeichnet, daß** die Dicke der Kunststofffolie (10) und die von der Strahlungsquelle (15, 16) gelieferte Strahlung derart aneinander angepaßt sind, daß die optische Eindringtiefe der Strahlung kleiner oder gleich der halben Dicke der Kunststofffolie (10) ist.

22. Verfahren nach einem der vorhergehenden Ansprüche, **dadurch gekennzeichnet, daß** auf mindestens einer Seite der Kunststofffolie (10) und an ihr anliegend eine Absorptionsvorrichtung (40, 42) zum Absorbieren von Strahlen vorgesehen ist.

23. Verfahren nach Anspruch 22, **dadurch gekennzeichnet, daß** die Absorptionsvorrichtung (40, 42) in unmittelbarem Kontakt an der Kunststofffolie (10) anliegt.

24. Verfahren nach Anspruch 22 oder 23, **dadurch gekennzeichnet, daß** die Absorptionsvorrichtung (40, 42) die Andruckfläche (11a, 12a) bildet.

25. Verfahren nach einem der vorhergehenden Ansprüche, **dadurch gekennzeichnet, daß** die Absorptionsvorrichtung (40, 42) als Metallblech (52), vorzugsweise als CrNi-Stahlblech, ausgebildet ist.

26. Verfahren nach Anspruch 25 **dadurch gekennzeichnet, daß** das Metallblech (52) eine absorbierende Beschichtung (50) trägt, vorzugsweise aus Schwarzchrom oder Ofenlack.

27. Verfahren nach einem der vorhergehenden Ansprüche 25 oder 26, **dadurch gekennzeichnet, daß** die der Strahlungsquelle zugewandte Seite des Metallblechs (52) aufgerauht ist.

28. Verfahren nach einem der vorhergehenden Ansprüche, **dadurch gekennzeichnet, daß** die Absorptionsvorrichtung (40, 42) mit einer absorbierenden Hartstoffschicht oder absorbierenden DLC-Schicht, vorzugsweise der Dicke von 0,2 - 3 µm, versehen ist.

29. Verfahren nach einem der vorhergehenden Ansprüche, **dadurch gekennzeichnet, daß** als Kunststofffolie Polyester, Polycarbonat, PET oder Polyamid verwendet wird.

30. Verfahren nach Anspruch 29, **dadurch gekennzeichnet, daß** die Kunststofffolie aus mit Rußteilchen gefülltem Polyamid besteht.

31. Verfahren nach einem der vorhergehenden Ansprüche, **dadurch gekennzeichnet, daß** die Breite des Standarddruckformats für die Kunststofffolie (10) mindestens dem DIN-A4-Format entspricht.

32. Verfahren nach einem der vorhergehenden Ansprüche, **dadurch gekennzeichnet, daß** die Kunststofffolie (10) eine Dicke im Bereich von 20 bis 500 µm hat, vorzugsweise im Bereich von 50 bis 200 µm.

33. Einrichtung zur Herstellung eines Endlosbandes aus Kunststoff für ein Zwischenträgerband in einem elektrografischen Drucker oder Kopierer,
bei der Mittel vorgesehen sind, derart dass die Enden einer thermoplastischen teilkristallinen Kunststofffolie (10), die mindestens die Breite eines Standarddruckformats hat, stirnseitig auf Stoß aneinanderlegbar sind, und
die Enden der Kunststofffolie (10) durch Strahlung auf eine für die Verschweißung erforderliche Temperatur erhitzbar und miteinander verschweißbar sind,
und bei der weiterhin Mittel vorgesehen sind, die nach der Verschweißung im Nahtbereich eine Rekristallisierung des Kunststoffmaterials bewirken.

34. Einrichtung nach Anspruch 33, **dadurch gekennzeichnet, daß** Mittel vorgesehen sind, durch die die Abkühlphase für das Kunststoffmaterial im Nahtbereich verlängert ist.

35. Einrichtung nach Anspruch 33 oder 34, bei der zur Rekristallisierung eine Energiezuführung erfolgt.

36. Einrichtung nach Anspruch 35, **dadurch gekennzeichnet, daß** die Energiezuführung derart erfolgt, daß ein vorgegebenes Temperatur-Zeitdiagramm eingehalten wird.

37. Einrichtung nach einem der vorhergehenden Ansprüche, wobei Mittel vorgesehen sind, derart, daß der Nahtbereich nach dem Abkühlen durch eine mindestens einmalige erneute Energiezufuhr auf eine Temperatur unterhalb der Schmelztemperatur aufgeheizt wird.

38. Einrichtung nach einem der vorhergehenden Ansprüche, **dadurch gekennzeichnet, daß** eine Energiequelle, durch die die Verschweißung erfolgt, auch für die Energiezuführung zur Rekristallisierung verwendet wird.

39. Einrichtung nach einem der vorhergehenden Ansprüche, **dadurch gekennzeichnet, daß** zur Energiezuführung für die Rekristallisierung eine zusätzliche Energiequelle verwendet wird.

## Claims

1. Method for manufacturing an endless band of plastic for an intermediate carrier band in an electrographic printer or copier,
in which the ends of a thermoplastic, partially crystalline plastic film (10) that comprises at least the width of a standard printing format have their end faces placed abutting one another,
the ends of the plastic film (10) are heated by radiation to the temperature required for the welding, and are welded to one another,
and in which a recrystallization step during which the plastic material recrystallizes in the seam region takes place following the welding.

2. Method according to claim 1, **characterized in that** the recrystallization step comprises measures in which the cooling phase for the plastic material in the seam region is lengthened.

3. Method according to claim 1 or 2, in which an energy application takes place during the recrystallization step.

4. Method according to claim 3, **characterized in that** the energy application takes place such that a predetermined temperature-time diagram is adhered to.

5. Method according to one of the preceding claims, **characterized in that**, following the cooling, the seam region is heated to a temperature below the melting temperature by means of an at least one-time re-application of energy.

6. Method according to claim 5, **characterized in that** a predetermined temperature-time diagram is adhered to.

7. Method according to one of the preceding claims, **characterized in that** the energy source with which the welding takes place is also employed for supplying energy for the recrystallization.

8. Method according to one of the preceding claims, **characterized in that** an additional energy source is employed for supplying the energy for the recrystallization.

9. Method according to one of the preceding claims, **characterized in that** a respective pressing surface (11a, 12a) is arranged at both sides of the ends, the length of said pressing surface at least corresponding to the width of the standard printing format and this pressing the surfaces of the ends against one another such that, when the plastic material of the end faces of the ends residing opposite one another melts, the spacing of the pressing surfaces (11a, 12a) defined by the thickness of the cold plastic film (10) is preserved.

10. Method according to one of the preceding claims, **characterized in that** the plastic film (10) is heated by radiation proceeding from one side.

11. Method according to claim one of the preceding claims, **characterized in that** the plastic film (10) is heated by radiation from both sides.

12. Method according to one of the preceding claims, **characterized in that** the plastic film (10) is simultaneously heated by radiation from both sides.

13. Method according to claim 12, **characterized in that** the plastic film (10) is heated by radiation at one side and, after being turned over, is subsequently heated further at the other side.

14. Method according to one of the preceding claims, **characterized in that** the heating of the plastic film (10) takes place by means of laser radiation.

15. Method according to one of the preceding claims, **characterized in that** the radiation is respectively absorbed at that side of the plastic film (10) facing toward the radiation source (15, 17).

16. Method according to one of the preceding claims, **characterized in that** the ends of the plastic film (10) residing opposite one another are pre-stressed relative to one another during the welding.

17. Method according to one of the preceding claims, **characterized in that** the temperature of the plastic film (10) at the weld (19) is measured during the welding process and/or the energy application for the recrystallization, and the radiation capacity is set or regulated dependent on the measured temperature.

18. Method according to one of the preceding claims, **characterized in that** the plastic film (10) is irradiated proceeding from one side and the radiation passing through a gap between the ends to be welded is detected at the other side.

19. Method according to one of the preceding claims, **characterized in that** the pressing surfaces (11a, 12a) are formed by plates (11, 12).

20. Method according to claim 19, **characterized in that** at least one of the plates (11, 12) is composed of a material transparent for the radiation, preferably glass, wherein the plates preferably comprise an anti-adhesion layer of Teflon or a hydrophobic DLC layer.

21. Method according to one of the preceding claims, **characterized in that** the thickness of the plastic film (10) and the radiation delivered by the radiation source (15, 16) are matched to one another such that the optical penetration depth of the radiation is less than or equal to half the thickness of the plastic film (10).

22. Method according to one of the preceding claims, **characterized in that** an absorption device (40, 42) for absorbing rays is provided on at least one side of the plastic film (10) and lying thereagainst.

23. Method according to claim 22, **characterized in that** the absorption device (40, 42) lies in direct contact against the plastic film (10).

24. Method according to claim 22 or 23, **characterized in that** the absorption device (40, 42) forms the pressing surface (11a, 12a).

25. Method according to one of the preceding claims, **characterized in that** the absorption device (40, 42) is fashioned as metal sheet (52), preferably as CrNi steel sheet.

26. Method according to claim 25, **characterized in that** the metal sheet (52) preferably carries an absorbent coating (50), preferably of black chromium or stoving enamel.

27. Method according to one of the preceding claims 25 or 26, **characterized in that** the side of the metal sheet (52) facing toward the radiation source is roughened.

28. Method according to one of the preceding claims, **characterized in that** the absorption device (40, 42) is provided with an absorbent hard-aggregate layer or absorbent DLC layer, preferably having a thickness of 0.2-3 µm.

29. Method according to one of the preceding claims, **characterized in that** polyester, polycarbonate, PET or polyamide is employed as plastic film.

30. Method according to claim 29, **characterized in that** the plastic film is composed of polyamide filled with lampblack particles.

31. Method according to one of the preceding claims, **characterized in that** the width of the standard printing format for the plastic film (10) at least corresponds to the DIN A4 format.

32. Method according to one of the preceding claims, **characterized in that** the plastic film (10) has a thickness in the range from 20 to 500 µm, preferably in the range from 50 to 200 µm.

33. Device for manufacturing an endless band of plastic for an intermediate carrier band in an electrographic printer or copier,
wherein means are provided such that the ends of a thermoplastic partially crystalline plastic film (10) that comprises at least the width of a standard printing format have their end faces placed abutting one another,
the ends of the plastic film (10) can be heated by radiation to a temperature required for the welding and can be welded to one another,
and in which further means are provided that effect a recrystallization of the plastic material after welding in the seam region.

34. Device according to claim 33, **characterized in that** means are provided with which the cooling phase for the plastic material in the seam region is lengthened.

35. Device according to claim 33 or 34, in which an energy application takes place for the recrystallization.

36. Device according to claim 35, **characterized in that** the energy application takes place such that a predetermined temperature-time diagram is adhered to.

37. Device according to one of the preceding claims, **characterized in that**, following the cooling, the seam region is heated to a temperature below the melting temperature by means of an at least one-time re-application of energy.

38. Device according to one of the preceding claims, **characterized in that** the energy source with which the welding takes place is also employed for supplying energy for the recrystallization.

39. Device according to one of the preceding claims, **characterized in that** an additional energy source is employed for supplying the energy for the recrystallization.

## Revendications

1. Procédé de fabrication d'une bande sans fin en matière plastique destinée à une bande de support intermédiaire dans un appareil d'impression ou un copieur électrographique, dans lequel :
les extrémités d'une feuille de matière plastique (10); thermoplastique partiellement cristalline, qui a au moins la largeur d'un format d'impression standard, sont aboutées du côté frontal,
les extrémités de la feuille de matière plastique (10) sont chauffées par rayonnement à la température nécessaire au soudage, et sont soudées l'une à l'autre, et
une étape de recristallisation est mise en oeuvre après le soudage, dans laquelle la matière plastique est recristallisée dans la zone de jonction.

2. Procédé selon la revendication 1, **caractérisé en ce que** l'étape de recristallisation comporte des mesures consistant à prolonger la phase de refroidissement de la matière plastique dans la zone de jonction.

3. Procédé selon la revendication 1 ou 2, dans lequel un apport d'énergie est effectué pendant l'étape de recristallisation.

4. Procédé selon la revendication 3, **caractérisé en ce que** l'apport d'énergie est effectué en respectant une courbe prescrite de la température en fonction du temps.

5. Procédé selon l'une des revendications précédentes, **caractérisé en ce que**, après refroidissement, la zone de jonction est chauffée en effectuant au moins une fois un nouvel apport d'énergie à une température inférieure à la température de fusion.

6. Procédé selon la revendication 5, **caractérisé en ce que** l'on respecte une courbe prescrite de la température en fonction du temps.

7. Procédé selon l'une des revendications précédentes, **caractérisé en ce que** la source d'énergie permettant d'effectuer le soudage est également utilisée pour l'apport d'énergie destiné à la recristallisation.

8. Procédé selon l'une des revendications précédentes, **caractérisé en ce que** l'on utilise une source d'énergie supplémentaire pour effectuer l'apport d'énergie destiné à la recristallisation.

9. Procédé selon l'une des revendications précédentes, **caractérisé en ce qu'**il est prévu, des deux côtés, au niveau de chacune des extrémités, une surface de pressage (11a, 12a) dont la longueur correspond au moins à la largeur du format d'impression standard, qui presse les surfaces des extrémités l'une contre autre de façon à maintenir constante la distance entre les surfaces de pressage (11a, 12a), qui est définie par l'épaisseur de la feuille de matière plastique à froid (10), lors de la fusion de la matière plastique sur les côtés frontaux des extrémités opposées l'une à l'autre.

10. Procédé selon l'une des revendications précédentes, **caractérisé en ce que** la feuille de matière plastique (10) est chauffée sur un côté par rayonnement.

11. Procédé selon l'une des revendications précédentes, **caractérisé en ce que** la feuille de matière plastique (10) est chauffée des deux côtés par rayonnement.

12. Procédé selon l'une des revendications précédentes, **caractérisé en ce que** la feuille de matière plastique (10) est chauffée simultanément des deux côtés par rayonnement.

13. Procédé selon la revendication 12, **caractérisé en ce que** la feuille de matière plastique (10) est chauffée sur un côté par rayonnement, puis est ensuite chauffée de l'autre côté après avoir retourné la feuille.

14. Procédé selon l'une des revendications précédentes, **caractérisé en ce que** le soudage de la feuille de matière plastique (10) est effectué par rayonnement laser.

15. Procédé selon l'une des revendications précédentes, **caractérisé en ce que** le rayonnement est absorbé dans la feuille de matière plastique (10) du côté qui est dirigé vers la source de rayonnement (15, 17).

16. Procédé selon l'une des revendications précédentes, **caractérisé en ce que** les extrémités, opposées l'une à l'autre, de la feuille de matière plastique (10) sont précontraintes l'une contre l'autre pendant le soudage.

17. Procédé selon l'une des revendications précédentes, **caractérisé en ce que** la température de la feuille de matière plastique (10) est mesurée au niveau de la jonction par soudure (19) pendant le processus de soudage et/ou l'apport d'énergie destiné à la recristallisation et la puissance du rayonnement sont réglés ou régulés en fonction de la température mesurée.

18. Procédé selon l'une des revendications précédentes, **caractérisé en ce que** la feuille de matière plastique (10) est irradiée d'un côté, et **en ce que** l'on détecte le rayonnement passant de l'autre côté par une fente ménagée entre les extrémités à souder.

19. Procédé selon l'une des revendications précédentes, **caractérisé en ce que** les surfaces de pressage (11a, 12a) sont formées par des plaques (11, 12).

20. Procédé selon la revendication 19, **caractérisé en ce que** au moins l'une des plaques (11, 12) est en un matériau transparent au rayonnement, avantageusement en verre, lesdites plaques comportant avantageusement une couche antiadhésive en Téflon ou une couche DLC hydrophobe.

21. Procédé selon l'une des revendications précédentes, **caractérisé en ce que** l'épaisseur de la feuille de matière plastique (10) et le rayonnement délivré par la source de rayonnement (15, 16) sont adaptés l'un à l'autre de façon que la profondeur de pénétration optique du rayonnement soit inférieure ou égale à la moitié de l'épaisseur de la feuille de matière plastique (10).

22. Procédé selon l'une des revendications précédentes, **caractérisé en ce qu'**un dispositif d'absorption (40, 42) destiné à absorber les rayons est prévu sur au moins un côté de la feuille de matière plastique (10), en étant appliqué sur celui-ci.

23. Procédé selon la revendication 22, **caractérisé en ce que** le dispositif d'absorption (40, 42) est posé en contact direct contre la feuille de matière plastique (10).

24. Procédé selon la revendication 22 ou 23, **caractérisé en ce que** le dispositif d'absorption (40, 42) forme la surface de pressage (11a, 12a).

25. Procédé selon l'une des revendications précédentes, **caractérisé en ce que** le dispositif d'absorption (40, 42) est conformé en tôle métallique (52), avantageusement en tôle en acier CrNi.

26. Procédé selon la revendication 25, **caractérisé en ce que** la tôle métallique (52) porte un revêtement absorbant (50), avantageusement en chrome noir ou en vernis au four.

27. Procédé selon l'une des revendications précédentes 25 ou 26, **caractérisé en ce que** le côté de la tôle métallique (52), qui est dirigé vers la source de rayonnement, est rendu rugueux.

28. Procédé selon l'une des revendications précédentes, **caractérisé en ce que** le dispositif d'absorption (40, 42) est doté d'une couche de matière dure absorbante ou d'une couche DLC absorbante, ayant avantageusement une épaisseur comprise entre 0,2 et 3 µm.

29. Procédé selon l'une des revendications précédentes, **caractérisé en ce que** l'on utilise comme feuille de matière plastique du polyester, du polycarbonate, du PET, ou du polyamide.

30. Procédé selon la revendication 29, **caractérisé en ce que** la feuille de matière plastique est en polyamide rempli de particules de noir de carbone.

31. Procédé selon l'une des revendications précédentes, **caractérisé en ce que** la largeur du format d'impression standard de la feuille de matière plastique (10) correspond au moins au format DIN-A4.

32. Procédé selon l'une des revendications précédentes, **caractérisé en ce que** la feuille de matière plastique (10) a une épaisseur de l'ordre de 20 à 500 *µ*m, avantageusement de l'ordre de 50 à 200 *µ*m.

33. Dispositif de fabrication d'une bande sans fin en matière plastique destinée à une bande de support intermédiaire dans un appareil d'impression ou un copieur électrographique, dans lequel :
il est prévu des moyens permettant d'abouter du côté frontal les extrémités d'une feuille de matière plastique (10), thermoplastique partiellement cristalline, qui a au moins la largeur d'un format d'impression standard, et
les extrémités de la feuille de matière plastique (10) peuvent être chauffées et soudées l'une à l'autre par rayonnement à une température nécessaire au soudage, et
il est en outre prévu des moyens qui génèrent une recristallisation de la matière plastique après le soudage dans la zone de jonction.

34. Dispositif selon la revendication 33, **caractérisé en ce qu'**il est prévu des moyens permettant de prolonger la phase de refroidissement de la matière plastique dans la zone de jonction.

35. Dispositif selon la revendication 33 ou 34, dans lequel un apport d'énergie est effectué pour la recristallisation.

36. Dispositif selon la revendication 35, **caractérisé en ce que** l'apport d'énergie est effectué en respectant une courbe prescrite de la température en fonction du temps.

37. Dispositif selon l'une des revendications précédentes, dans lequel il est prévu des moyens permettant de chauffer, après le refroidissement, la zone de jonction en effectuant au moins une fois un nouvel apport d'énergie à une température inférieure à la température de fusion.

38. Dispositif selon l'une des revendications précédentes, **caractérisé en ce qu'**une source d'énergie, permettant d'effectuer le soudage, est également utilisée pour l'apport d'énergie destiné à la recristallisation.

39. Dispositif selon l'une des revendications précédentes, **caractérisé en ce que** l'on utilise une source d'énergie supplémentaire pour l'apport d'énergie destiné à la recristallisation.
